# EUROPEAN PATENT SPECIFICATION

(11) **EP 2 228 291 B1**
(45) Date of publication and mention of the grant of the patent: **28.12.2011**
(21) Application number: 09168446.4
(22) Date of filing: 24.08.2009
(51) Int. Cl.: B62L 5/16, B62L 1/00, F16D 51/10, F16D 51/12, F16D 65/08, F16D 65/14

(54) **Bicycle hub braking device**
Fahrradnabenbremse
Frein à moyen pour bicyclette

(30) Priority: 11.03.2009 JP 2009057660
(43) Date of publication of application: 15.09.2010
(73) Proprietor: Shimano, Inc., Osaka 590-8577 (JP)
(72) Inventor: Itou, Minoru c/o Shimano Inc., Osaka Osaka 590-8577 (JP); Tanaka, Keita c/o Shimano Inc., Osaka Osaka 590-8577 (JP)
(74) Representative: Hofmann, Harald

(56) References cited:
- EP-A1- 0 064 839
- EP-A1- 0 628 474
- EP-A1- 1 157 920
- EP-A2- 0 562 288
- EP-A2- 0 688 713
- EP-A2- 1 371 546
- JP-U- 7 013 687

## Description

### [Technical Field]

The present invention relates to a hub braking device, and more particularly, to a bicycle hub braking device that applies braking to a wheel hub mounted on a bicycle frame.

### [Background Art]

Hub braking devices such as a roller brake that applies braking to a wheel hub are conventionally known as bicycle braking devices. A roller braking device comprises: a fixing bracket fixable to a frame; a brake drum disposed so as to oppose the fixing bracket; a brake operating portion including an operating arm portion, rollers, and a cam member; and a brake shoe to be pressed against the brake drum by the rollers. The operating arm portion is coupled to a braking lever via a braking cable. In response to a pivotal movement of the operating arm portion, the cam member rotationally moves around a hub axle over a predetermined angle from a brake releasing position. A cam surface with an outer diameter that gradually increases from the brake releasing position is formed on an outer peripheral surface of the cam member. A plurality of rollers is disposed at intervals in the circumferential direction between the cam member and the brake shoe. When the operating arm portion pivots in a braking direction, the brake shoe is pressed by the cam member via the rollers and comes into contact with the brake drum. The brake shoe is biased by a spring member in a separating direction with respect to the brake drum. When the operating arm portion pivots in a brake releasing direction, the brake shoe moves in a separating direction with respect to the brake drum due to the action of the spring member.

With such a roller braking device, a cam angle of the cam member is conventionally set constant. When the cam angle of the cam member is set constant, there is a risk that the braking force may suddenly and curvedly increase when the braking lever is tightly gripped.

In this light, a roller braking device is known having a braking characteristic in which braking is exerted with a small force at the start of gripping of the braking lever and a desired braking force is obtained by further gripping. In order to realize such a function, conventionally, an angle of a cam surface of a cam member is set so as to gradually increase from the start of gripping (for example, refer to Patent Document 1). By arranging the angle of the cam surface to gradually increase in this manner, the braking force when the braking lever is fully gripped decreases. As a result, a braking characteristic can be obtained in which the braking force increases linearly with respect to the stroke of the braking lever. Through such a linear braking characteristic, a desired braking force is to be obtained when the braking lever is fully gripped.

### [Prior Art Documents]

### [Patent Documents]

Document JP 7 013687 discloses a bicycle hub braking device according to the preamble of claim 1.
[Patent Document 1] Japanese Patent No. 3682957

### [Summary of the Invention]

### [Problems to be Solved by the Invention]

Generally, with a roller braking device, a gap between a brake shoe and a brake drum varies due to wear of the brake drum or the brake shoe caused by prolonged use or a variation in the initial position of a cam member (i.e., operating arm portion). When this gap varies, the position of rotational movement of the cam member varies upon the start of braking at which the brake shoe comes into contact with the brake drum. In the aforementioned conventional configuration in which the angle of the cam surface is gradually increased, when the position of the rotational movement of the cam member upon the start of braking varies in this manner, there is a risk that a braking characteristic from the start of braking may vary.

Specifically, as the gap between the brake shoe and the brake drum widens due to wear, a stroke of a braking lever needed until braking starts increases. Consequently, a pivot position of an operating arm portion upon the start of braking or, in other words, the position of rotational movement of the cam member varies in a braking direction as compared to a case where no wear has occurred and the braking characteristic after the start of braking varies. In addition, when the stroke until start of braking is large, the tension of a braking cable is adjusted from the braking lever side or the braking cable is restrung. As a result, the operating arm portion pivots in the braking direction and the brake shoe is pressed by the cam member via the roller and moved in the direction of the brake drum. Accordingly, the gap between the brake shoe and the brake drum becomes narrower and the stroke until start of braking can be reduced. Even after performing such adjustment, in the same manner as in a case where adjustment is not performed, the pivot position of the operating arm portion upon the start of braking or, in other words, the position of rotational movement of the cam member varies in a braking direction, thereby causing the braking characteristic after the start of braking to vary and preventing a desired braking characteristic from being maintained.

An object of the present invention is to enable a bicycle hub braking device to maintain a desired braking characteristic after the start of braking regardless of a pivot position of a cam member upon the start of braking.

### [Means for Solving the Problems]

A bicycle hub braking device according to the present invention is a device capable of applying braking to a wheel hub mounted on a bicycle frame. The hub braking device comprises a fixing bracket, a brake drum, a brake operating portion, and a plurality of arc-shaped brake shoes. The brake operating portion includes an operating arm portion, a cam member, and a plurality of rollers. The operating arm portion is mounted so as to be pivotable around a hub axle to the fixing bracket, and is coupleable to a braking lever mounted to the bicycle. The cam member integrally rotationally moves with the operating arm portion, and has a plurality of first cam portions whose outer diameter gradually increases in a circumferential direction on an outer peripheral surface thereof. Each of the plurality of first cam portion is in contact with a single roller of a plurality of rollers. The plurality of rollers is disposed at intervals in the direction of rotation, and in response to the rotational movement of the cam member, moves in a radial direction while rolling. The plurality of brake shoes are disposed so as to pinch the rollers between themselves and the cam member, and include: a contact surface capable of coming into contact with a braking surface of the brake drum; and a second cam portion on the arc shaped brake shoes formed such that a distance from the center of rotational movement of the hub at a first position that is a portion in contact with the rollers differ from a distance from the center of rotational movement at a second position that is separated from the first position. The brake shoes are substantially non-rotatable with respect to the fixing bracket, and are arc-shaped parts that apply braking to the brake drum.

With this hub braking device, by operating the braking lever and moving the operating arm portion in the braking direction while the bicycle is in motion, the cam member rotationally moves, the first cam portion presses the brake shoes via the rollers, and the brake shoes come into contact with the brake drum. When the brake shoes come into contact with the brake drum to start braking, in response to the rotational movement of the first cam portion, the rollers come into contact with the second cam portion formed on the brake shoes and roll from the first position to the second position. Since the first position has a greater distance from the center of the rotational axis than the second position, the brake shoes are further pressed by the second cam portion. Accordingly, the brake shoes press against the brake drum in accordance with the cam shapes of the first and second cam portions and braking force can be linearly increased from the start of braking at the second cam portion.

Here, after the start of braking, the braking characteristic can be linearly varied due to the cam shape of the second cam portion formed on the brake shoes. For this reason, even when the position of rotational movement of the operating arm portion upon the start of braking varies due to wear of the brake shoes or the brake drum, the braking characteristic after the start of braking is less likely to vary. Therefore, the braking characteristic after the start of braking can be maintained regardless of the position of rotational movement of the cam member upon the start of braking.

A bicycle hub braking device according to a first aspect of the present invention is a device capable of applying braking to a wheel hub mounted on a bicycle frame. The hub braking device comprises a fixing bracket, a brake drum, a brake operating portion, and a plurality of arc-shaped brake shoes. The fixing bracket is non-rotatably mountable to a frame. The brake drum is a cylindrical part having a braking surface formed on an inner peripheral surface thereof and which is disposed so as to oppose the fixing bracket and is integrally rotatable with the hub. The brake operating portion includes an operating arm portion, a cam member, and a plurality of rollers. The operating arm portion is mounted so as to be pivotable around a hub axle to the fixing bracket, and is coupleable to a braking lever mounted to the bicycle. The cam member integrally rotationally moves with the operating arm portion, and has a first cam portion whose outer diameter gradually increases in a circumferential direction on an outer peripheral surface thereof. The plurality of rollers is in contact with the first cam portion and disposed at intervals in the direction of rotation, and in response to the rotational movement of the cam member, moves in a radial direction while performing a rolling movement. The plurality of brake shoes are disposed so as to pinch the rollers between themselves and the cam member, and include: a contact surface capable of coming into contact with the braking surface of the brake drum; and a second cam portion formed on a portion in contact with the rollers such that a distance from the center of rotational movement of the hub gradually varies. The brake shoes are substantially non-rotatable with respect to the fixing bracket, and apply braking to the brake drum.

With this hub braking device, by operating the braking lever and moving the operating arm portion in the braking direction while the bicycle is in motion, the cam member rotationally moves, the first cam portion presses the brake shoes via the rollers, and the brake shoes come into contact with the brake drum. When the brake shoes come into contact with the brake drum to start braking, in response to the rotational movement of the first cam portion, the rollers come into contact with the second cam portion formed on the brake shoe and roll. Accordingly, the brake shoes press against the brake drum in accordance with the cam shapes of the first and second cam portions. At this point, even when the cam angle of the first cam portion is set constant, the braking force when fully gripping the braking lever can be reduced, and the braking force can be linearly increased from the start of braking by the second cam portion.

Here, after the start of braking, the braking characteristic can be linearly varied due to the cam shape of the second cam portion formed on the brake shoes. For this reason, even when the position of rotational movement of the operating arm portion upon the start of braking varies due to wear of the brake shoes or the brake drum, the braking characteristic after the start of braking is less likely to vary. Therefore, the braking characteristic after the start of braking can be maintained regardless of the position of rotational movement of the cam member upon the start of braking.

A bicycle hub braking device according to a third aspect of the present invention is the device according to the first aspect of the present invention, wherein the brake operating portion further includes: a roller case provided on the fixing bracket so as to be rotationally movable over a predetermined distance from a brake starting position and which disposes the rollers at intervals in the circumferential direction; and a biasing member that biases the roller case to the side of the brake starting position.

In this case, even when the roller case moves from the brake starting position during braking in which the brake shoes come into contact with the brake drum, due to the biasing force of the biasing member, the roller case returns to a brake releasing position during brake release at which the brake shoes separate from the brake drum. As a result, the position of the rollers during brake release can be kept constant.

A bicycle hub braking device according to a fourth aspect of the present invention is the device according to the second aspect of the present invention, wherein the second cam portion includes a brake releasing cam at which the rollers are disposed in a brake released state and whose inner diameter is the largest; and a braking cam formed on at least one side of the brake releasing cam.

In this case, since the rollers move from the braking cam to the brake releasing cam when the operating arm portion is pivoted in the brake releasing direction to release braking, the rollers reliably move to the brake releasing cam during brake release.

A bicycle hub braking device according to a fifth aspect of the present invention is the device according to the fourth aspect of the present invention, wherein the braking cam is formed such that the distance from the center of rotational movement gradually decreases as the braking cam separates from the brake releasing cam. In this case, when the rollers roll on the braking cam, a braking characteristic is obtained in which the braking force increases linearly.

A bicycle hub braking device according to a sixth aspect of the present invention is the device according to the third aspect of the present invention, wherein the second cam portion includes: a brake releasing cam with which the rollers come into contact in a brake released state and whose inner diameter is the largest; and a braking cam formed on at least one side of the brake releasing cam.

In this case, since the rollers move from the braking cam to the brake releasing cam when the operating arm portion is pivoted in the brake releasing direction to release braking, the rollers reliably move to the brake releasing cam during brake release.

A bicycle hub braking device according to an seventh aspect of the present invention is the device according to the sixth aspect of the present invention, wherein the braking cam is formed such that the distance between the first position on a boundary with the brake releasing cam and the center of rotational movement is longer than the distance between the second position and the center of rotational movement. In this case, since the distance from the first position on the boundary with the brake releasing cam to the center of rotational movement is greater than the distance between the second position and the center of rotational movement, the movement of the rollers from the brake releasing cam to the braking cam enables the brake shoes to be pressed with a linearly increasing force.

A bicycle hub braking device according to a eighth aspect of the present invention is the device according to any of the fourth to seventh aspects of the present invention, wherein braking cams are formed on both sides of the brake releasing cam. In this case, by symmetrically disposing braking cams having the same cam shape with the brake releasing cam in-between, since the operating arm portion of a front wheel and the operating arm portion of a rear wheel pivot in opposite directions, one braking cam can be used for the front wheel and the other braking cam can be used for the rear wheel. Therefore, brake shoes for the front and rear wheels can be standardized.

In addition, since braking cams with the same cam shape are disposed on both sides of the brake releasing cam, brake shoes can now be mounted without incident even when the sides thereof are reversed, thereby reducing assembly error.

Furthermore, by disposing braking cams with different cam shapes on both sides of the brake releasing cam, by reversing the sides thereof, different braking characteristics can be obtained with one brake shoe.

A bicycle hub braking device according to a ninth aspect of the present invention is the device according to the eighth aspect of the present invention, wherein the braking cams on both sides of the brake releasing cam have inner diameters that gradually decrease at the same rate. In this case, since the braking cams are symmetrically disposed with the brake releasing cam in-between, the same braking characteristic can be obtained even the brake shoes are mounted with their sides reversed. In addition, brake shoes for the front and rear wheels can be standardized.

A bicycle hub braking device according to an tenth aspect of the present invention is the device according to any of the fourth to ninth aspects of the present invention, wherein a notch is formed between the brake releasing cam and the braking cam. In this case, since a notch is formed, the brake shoe can be moved rapidly radially outwards due to the notch. Therefore, the stroke of the braking cable from a brake released state until the start of braking can be shortened.

A bicycle hub braking device according to a eleventh aspect of the present invention is the device according to the tenth aspect of the present invention, wherein the difference in radial lengths of the notch represented as the difference between line segments connecting the center of rotational movement of the hub and the origin and terminal of the notch is within a range of 0.3 mm to 0.7 mm. In this case, since the notch is small, even if the notch is provided in order to reduce the stroke of the braking cable, the rollers are able to smoothly roll over the notch.

### [Advantage of the Invention]

According to the present invention, after the start of braking, the braking characteristic can be linearly varied due to the cam shape of the second cam portion formed on the brake shoes. For this reason, even when the position of rotational movement of the operating arm portion upon the start of braking varies due to wear of the brake shoes or the brake drum, the braking characteristic after the start of braking is less likely to vary. Therefore, a desired braking characteristic after the start of braking can be maintained regardless of the position of rotational movement of the cam member upon the start of braking.

### [Brief Description of the Drawings]

[Figure 1]

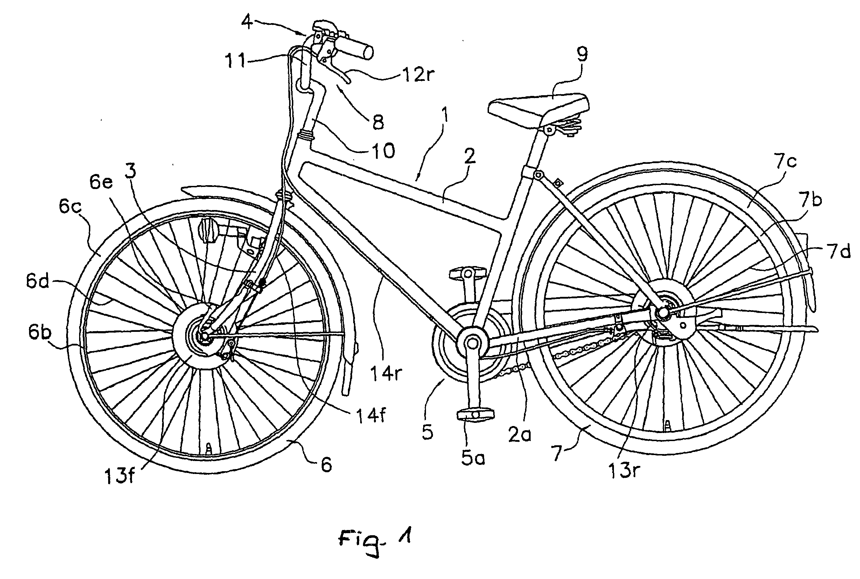

   Figure 1 is a right side view of a bicycle employing an embodiment of the present invention.
[Figure 2]

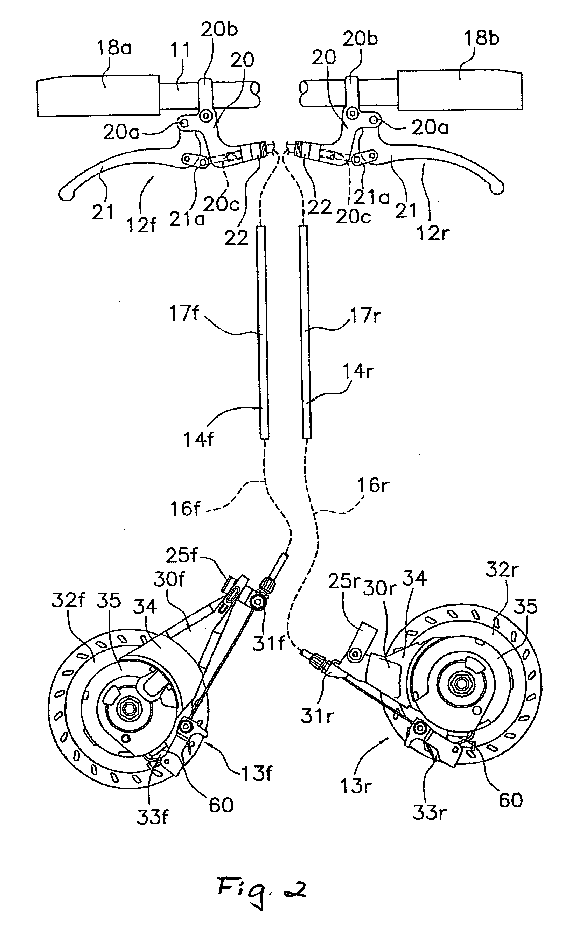

   Figure 2 is a configuration diagram of a braking system of the bicycle.
[Figure 3]

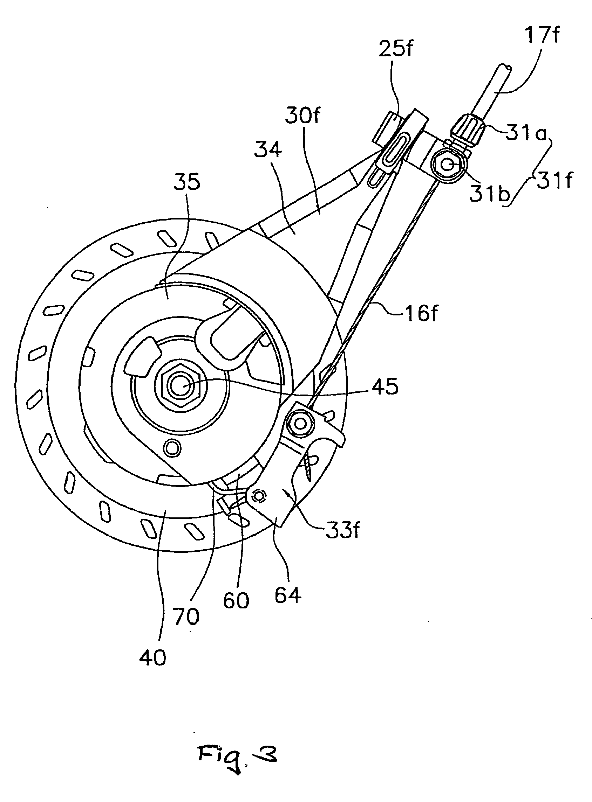

   Figure 3 is a side view of a front braking device.
[Figure 4]

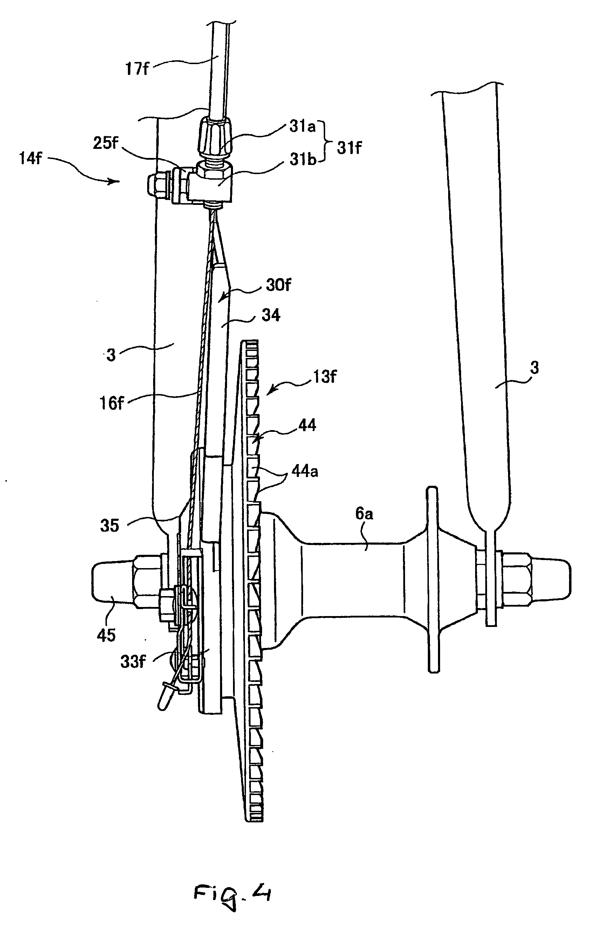

   Figure 4 is a front view of a front braking device.
[Figure 5]

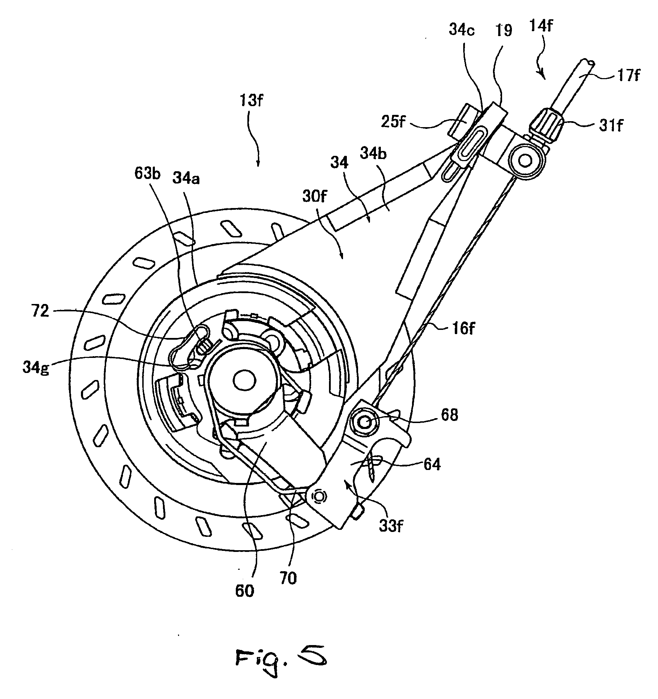

   Figure 5 is a side view of a front braking device in a state where a cover member has been removed.
[Figure 6]

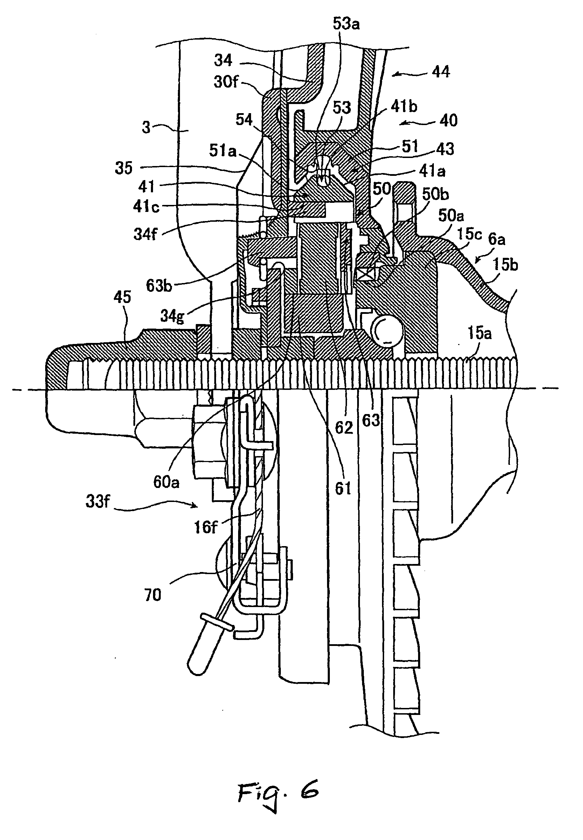

   Figure 6 is an enlarged half cutaway view of a front braking device.
[Figure 7]

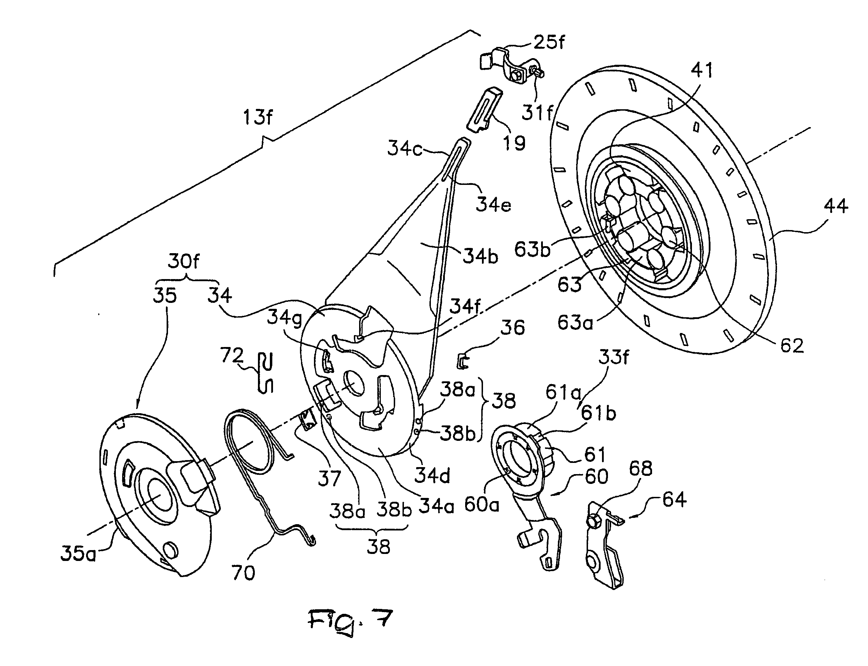

   Figure 7 is an exploded perspective view of a front braking device.
[Figure 8]

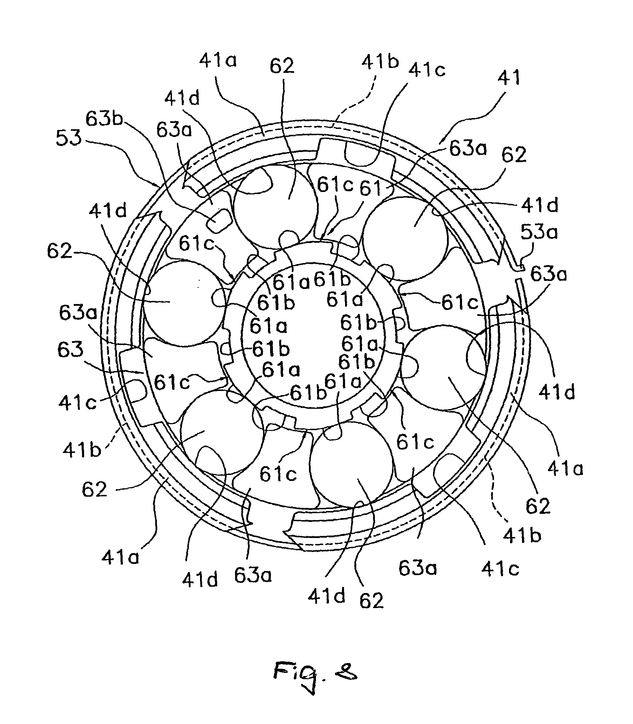

   Figure 8 is a front view of a braking device from which a brake drum and a fixing bracket have been removed.
[Figure 9]

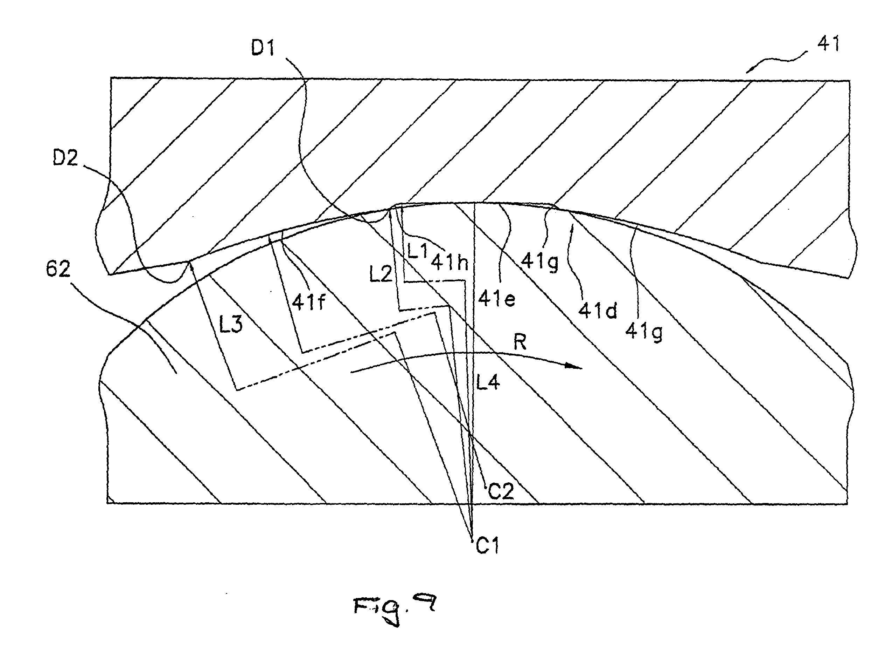

   Figure 9 is an enlarged cross-sectional view of a cam portion of a brake shoe.
[Figure 10]

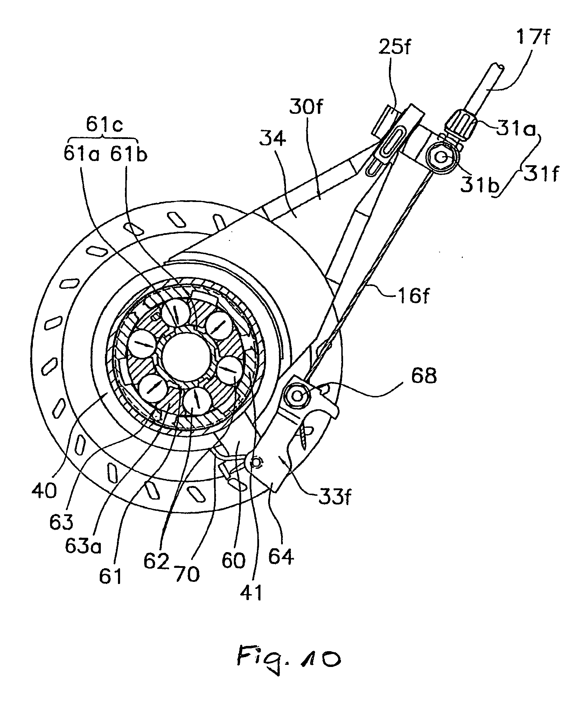

   Figure 10 is a diagram showing a braking operation of a front braking device.
[Figure 11]

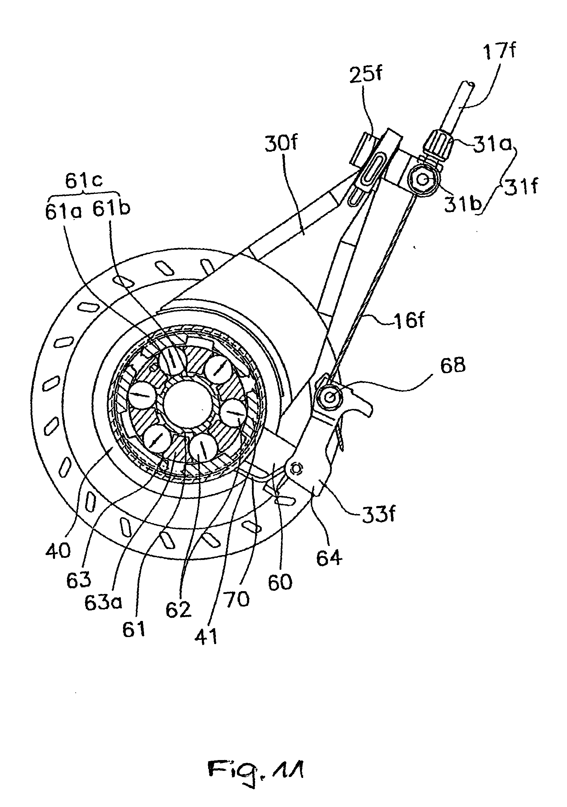

   Figure 11 is a diagram showing a braking operation of a front braking device.
[Figure 12]

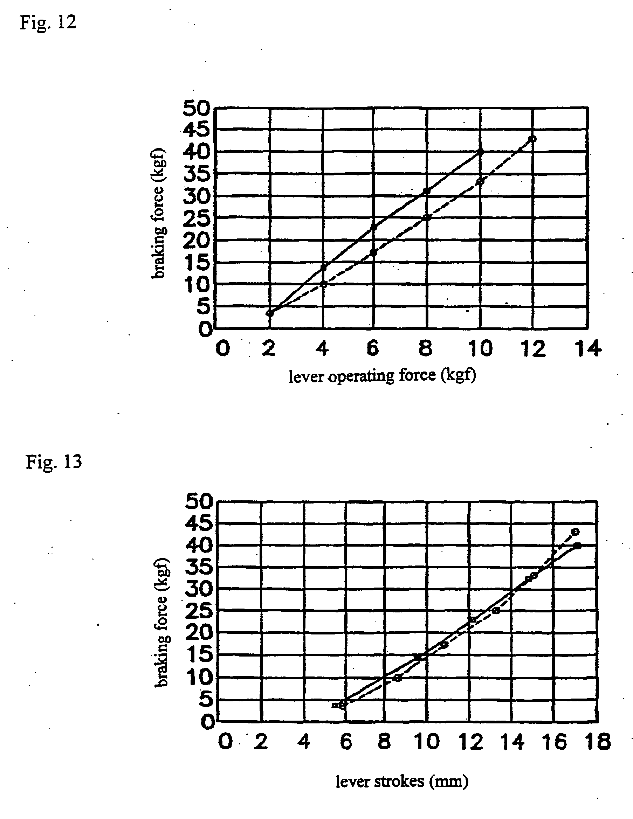

   Figure 12 is a graph showing a relationship between lever operating force and braking force.
[Figure 13]
   Figure 13 is a graph showing a relationship between lever strokes and braking force.

### [Best Mode for Carrying Out the Invention]

### <Overall Configuration>

In Figure 1, a bicycle adopting an embodiment of the present invention is a utility bicycle and comprises: a frame 1 having a frame body 2 and a front fork 3; a handle portion 4 for steering; a driving portion 5 for transmitting the rotation of a pedal 5a to a rear wheel 7; a front wheel 6; the rear wheel 7; and a braking system 8 for applying braking to the front wheel 6 and the rear wheel 7.

The respective portions of the handle portion 4, the driving portion 5, the front wheel 6, the rear wheel 7, a saddle 9 for sitting, the braking system 8, and the like are mounted to the frame 1.

The handle portion 4 has a handle stem 10 fixed to an upper portion of the front fork 3, and a handle bar 11 fixed to the handle stem 10. The front wheel 6 and the rear wheel 7 includes: front and rear hubs 6a (only the hub 6a for the front wheel is shown in Figure 4) having hub axles 15a (only the hub axle 15a for the front wheel is shown in Figure 4); front and rear rims 6b and 7b disposed to the outer peripheral sides of the hubs 6a; tires 6c and 7c mounted to the front and rear rims 6b and 7b; and spokes 6d and 7d which couple the hubs 6a to the rims 6b and 7b. As shown in Figure 6, the hub 6a includes: the hub axle 15a non-rotatably mounted to the front fork 3 of the frame 1; and a hub shell 15b rotatably supported by the hub axle 15a. As shown in Figure 1, the front hub 6a has a quick lever 6e and is arranged as a quick release hub that is readily attachable and detachable. However, since the configuration of a quick release portion is well known, an explanation of the quick release portion shall be omitted from the following description, and a brake system using a hub of the ordinary type that is tightened with a cap nut will be described.

### <Configuration of braking system>

As shown in Figure 2, the braking system 8 includes: front and rear braking levers 12f and 12r; front and rear braking devices 13f and 13r operated by the front and rear braking levers 12f and 12r; and front and rear braking cables 14f and 14r respectively connected to the front and rear braking levers 12f and 12r and the front and rear braking devices 13f and 13r.

Braking cables 14f and 14r include: inner cables 16f and 16r whose both ends are coupled to the braking levers 12f and 12r and to the roller braking devices 13f and 13r; and outer cables 17f and 17r covering the inner cables 16f and 16r.

The front braking lever 12f is mounted on the inside of a grip 18a mounted on the left end of the handle bar 11. The rear braking lever 12r is mounted on the inside of a grip 18b mounted on the right end of the handle bar 11. The braking levers 12f and 12r are members in a mirror-image relationship which share the same structure. The braking levers 12f and 12r include: a lever bracket 20 mounted on the handle bar 11; a lever member pivotally supported by the lever bracket 20; and an outer locking portion screwed in and fixed to the lever bracket 20.

The lever bracket 20 includes: a pivot axle 20a for pivotally supporting the lever member 21; a mounting portion 20b attachably/detachably mountable to the handle bar 11; and a female screw portion 20c capable of screwing the outer locking portion 22 and through which the inner cables 16f and 16r are passable.

The lever member 21 is pivotally mounted on the pivot axle 20a and is biased by a biasing member, not shown, towards a brake releasing side. The lever member 21 includes an inner locking portion 21 a that locks the inner cables 16f and 16r of the braking cables 14f and 14r.

### <Configuration of braking device>

The front and rear braking devices 13f and 13r are roller brakes that are an example of a bicycle hub braking device. As shown in Figure 2, the braking devices 13f and 13r apply braking to the hubs 6a of the front wheel 6 and the rear wheel 7 mounted to the frame 1. As shown in Figures 2, 3 and 7 (only the front side is shown), the braking devices 13f and 13r include: fixing brackets 30f and 30r non-rotatably fixed to the frame 1 of the bicycle; a cylindrical brake drum 40 disposed so as to oppose the fixing brackets 30f and 30r; brake operating portions 33f and 33r mounted on the fixing brackets 30f and 30r so as to be pivotable around the hub axle; and a plurality of brake shoes 41 that apply braking to the brake drum 40.

The fixing brackets 30f and 30r are for mounting the braking devices 13f and 13r onto the front fork 3 or a chain stay 2a (Figure 1) of the frame 1. The fixing brackets 30f and 30r include: a bracket main body 34 having a first surface and a second surface obtained by performing press molding on, for example, a steel plate; and a cover member 35 fittingly fixed to the bracket main body 34 and which covers the second surface of the bracket main body 34. The cover member 35 is formed by performing press-molding on sheet metal, and the surface thereof is subjected to baking coating and is provided with a design thereon such as a model number.

The bracket main body 34 includes a base portion 34a through which the hub axle 15a (only the front side is shown in Figure 6) penetrates; a tapering arm portion 34b that extends substantially radially from the base portion 34a; and a locking portion 34c formed at a distal end of the arm portion 34b and having a substantially equal-width plate shape.

As shown in Figure 6, the base portion 34a of the bracket main body 34 is pressed by a hexagonal cap nut 45 screwed into one end of the hub axle 15a and is fixed to the hub axle 15a. A tubular portion 34d whose length excluding a projected part of the arm portion 34b is very short is formed on the base portion 34a. Formed on the tubular portion 34d is a member mounting portion 38 made up of a pair of mounting holes 38a and 38b for mounting first retaining members 36 and 37 which prevent separation of the brake drum 40, to be described later.

The locking portion 34c of the bracket main body 34 is fixed to the bracket fixing members 25f and 25r. The locking portion 34c of the front-side bracket main body 34 is attachably/detachably locked by the bracket fixing member 25f by a one-touch mechanism so as to facilitate mounting and removal of the front wheel 6. A recessed portion 34e that is recessed and extends in a mounting direction is formed on a first surface (the front surface in Figure 6) of the front-side locking portion 34c.

Outer mounting portions 31f and 31 r capable of locking the outer cables 17f and 17r are respectively mounted to the bracket fixing member 25f and the fixing bracket 30r. The outer mounting portion 31f is screwed and fixed to the front-side bracket fixing member 25f. As shown in Figure 4, the outer mounting portion 31f includes: an outer locking portion 31 a capable of locking the outer cable 17f; and an outer fixing portion 31 b that fixes the outer locking portion 31a so that the locking position of the outer locking portion 31a in a cable axile direction is adjustable using a screw. Brake play (the gap between the brake drum and a brake shoe) can be adjusted by adjusting this axial position.

In the following description, since the braking devices 13f and 13r have substantially identical structures, only the structure of the front braking device 13f will be explained.

### <Configuration of brake drum>

As shown in Figure 6, the brake drum 40 has: a cylindrical drum main body 43 integrally rotatable with the hub and which has a braking surface 51 a on an inner peripheral surface thereof; and a cooling disk 44 fixed to the brake drum 40 on an outer peripheral side of the brake drum 40.

The drum main body 43 is a dish-like steel member including: a bottom portion 50 having an opening 50a; and a circumferential portion 51 formed on the outer peripheral side of the bottom portion 50. A concave-convex portion 50b mounted so as to be integrally rotatable to an outer peripheral surface of a left ball holding element 15c that makes up the hub shell 15b is formed on an inner peripheral surface of the opening 50a.

A circular braking surface 51a is formed on the inner peripheral surface of the circumferential portion 51. The braking surface 51a is formed recessed at an axial center part of the circumferential portion 51 in a trapezoidal shape whose cross section constricts in width radially outwards. Both sides of the braking surface 51 a preferably intersect each other at an angle of 80 to 100 degrees. The braking surface 51a includes, on an inner peripheral surface thereof, a ring-shaped grease-filled groove 54 formed recessed radially outwards on the braking surface 51a and which is filled inside with grease. The grease-filled groove 54 is formed on a most recessed portion of the braking surface 51a. Upon assembly, the grease-filled groove 54 is filled with grease.

As shown in Figures 4 to 7, the cooling disk 44 is a member made of aluminum alloy and is fixed by press-fitting and riveting to the outer peripheral surface of the drum main body 43. A large number of cooling fins 44a is radially formed on an inner side (right side of Figure 4) of the front side cooling disk 44.

In this manner, by fixing the cooling disk 44 to the drum main body 43 by press-fitting and then riveting, the cooling disk 44 can be reliably fixed to the drum main body 43. This operation involving pressure-fitting and riveting does not require the application of heat and can be performed at the same location. Therefore, discoloration and deformation due to heat can be prevented, the effort required for the manufacturing operation can be simplified, and the cooling disk 44 can be fixed to the drum main body 43 in a simple and inexpensive manner.

### <Configuration of brake operating portion>

Since the brake operating portions 33f and 33r are different in shape but have approximately the same structure, only the front brake operating portion 33f will be described hereinafter. The front brake operating portion 33f is pivotally provided on the fixing bracket 30f and presses the brake shoe 41 towards the side of the brake drum 40.

As shown in Figures 6 and 7, the front brake operating portion 33f includes: an operating arm portion 60; a cam member 61 that integrally rotationally moves with the operating arm portion 60; and a roller 62 disposed between the cam member 61 and the brake shoe 41. In addition, the brake operating portion 33f further includes: a plurality of (e.g., six) rollers 62 provided between the cam member 61 and the brake shoe 41 at intervals in the direction of rotation so as to come into contact with both the cam member 61 and the brake shoe 41; and a roller case 63 that holds the rollers 62 at intervals in the direction of rotation.

### <Configuration of operating arm portion>

The operating arm portion 60 is a member made from a metal plate. The operating arm portion 60 is mounted on the bracket main body 34 of the fixing bracket 30f so as to be pivotable between a brake releasing position (Figure 10) and a braking position (Figure 11). An inner mounting portion 64 that locks a tip of the inner cable 16f of the braking cable 14f is attachably/detachably mounted on a tip of the operating arm portion 60. The operating arm portion 60 is coupled by the inner cable 16f via the inner mounting portion 64 to the braking lever 12f mounted on the handle portion 4 of the bicycle. A basal end of the operating arm portion 60 is bent and inserted into the inside of a base portion of the bracket main body 34. A locking hole 60a (Figures 6 and 7) that locks with an outer peripheral surface of the cam member 61 is formed at the inserted portion. The operating arm portion 60 is biased in a brake releasing direction by a second spring member 70 (Figure 7). The second spring member 70 is a torsion coil spring whose one end is locked by the bracket main body 34 and the other end extends to the tip of the operating arm portion 60 and is locked by the locking hole 60b formed on the tip thereof. The outside of the operating arm portion 60 is covered by the cover member 35. The inner mounting portion 64 is attachably/detachably mounted on a tip of the operating arm portion 60. The inner mounting portion 64 includes an inner locking portion 68 capable of locking the inner cable 16f.

### <Configuration of cam member>

The cam member 61 is fixed by riveting so as to be integrally rotationally movable on the operating arm portion 60, and rotationally moves in response to pivoting of the operating arm portion 60. As shown in Figures 7, 8 and 10, the cam member 61 is a thick-walled cylindrical member made of, for instance, steel. Formed on an outer peripheral surface of the cam member 61 is a first cam portion 61c having: an inclined cam surface 61 a whose outer diameter gradually increases in proportion to the lever stroke of the braking lever 12f; and a recessed portion 61b disposed between the inclined cam surface 61a and formed more recessed than the inclined cam surface 61 a. In the present embodiment, the inclined cam surface 61 a is formed such that the outer diameter thereof in a circumferential direction gradually increases clockwise as seen in Figure 10. Specifically, a cam angle is set constant. Therefore, by pressing the roller 62 with the first cam portion 61c, a constant braking characteristic is obtained regardless of the pivot position of the operating arm portion 60.

### <Configuration of roller>

The roller 62 is provided to press the brake shoe 41 in a radial direction and against the brake drum 40 in response to the rotational movement of the cam member 61. The roller 62 is mounted between the outer peripheral surface of the cam member 61 and a second cam portion 41d, to be described later, of the brake shoe 41. The roller 62 is disposed by the roller case 63 at intervals in the direction of rotation of the brake drum 40, and is radially movable. The roller 62 moves radially while rolling in response to the rotational movement of the cam member 61. Specifically, due to the rotational movement of the cam member 61, the roller 62 revolves counter-clockwise while rotating clockwise and the roller case 63 moves counter-clockwise in response to the revolution of the roller 62.

### <Configuration of roller case 63>

The roller case 63 is rotationally movable around the hub axle over only a small distance. For example, six holding protrusions 63a for holding the roller 62 and which protrude outwards in the hub axle direction are formed at intervals in the direction of rotation on the roller case 63. A locking protrusion 63b formed so as to further protrude outwards in the hub axle direction is formed on one holding protrusion 63a. The locking protrusion 63b is locked to the bracket main body 34 so as to be movable around the hub axle over only a small distance from a brake starting position. As shown in Figures 5, 6 and 7, a long hole 34g having an arc-shape that is long in a circumferential direction and which is locked by the locking protrusion 63b is formed on the bracket main body 34. The circumferential length of the long hole 34g is longer than the locking protrusion 63b. The roller case 63 is rotationally movable in a circumferential direction from a brake starting position by exactly the difference in circumferential lengths between the long hole 34g and the locking protrusion 63b. A third spring member 72 is mounted between the roller case 63 and the locking protrusion 63b. The third spring member 72 biases the roller case 63 towards a brake releasing position in a clockwise direction as shown in Figure 5. Therefore, in response to a rotational movement of the cam member 61, the roller 62 held by the roller case 63 is rollable over only a small distance (a distance corresponding to the difference in circumferential lengths between the long hole 34g and the circumferential length of the locking protrusion 63b) in a counter-clockwise direction with respect to the brake drum 40. Inside the roller case 63, anticorrosion oil is filled around the roller 62. Consequently, the roller 62 can radially move in a smooth manner in response to the rotational movement of the cam member 61.

### <Configuration of brake shoe>

As shown in Figure 8, the brake shoe 41 is, for example, a ring-shaped member circumferentially divided into three segments which is made of, for example, chrome molybdenum steel.

The brake shoe 41 is disposed so as to pinch the roller 62 between itself and the cam member 61. As shown in Fig. 6, the brake shoe 41 has a contact surface 41 a on an outer peripheral surface thereof which is capable of coming into contact with the braking surface 51a during braking. The contact surface 41 a is formed such that a cross-section thereof has a trapezoid shape that protrudes so as to be able to come into contact with the braking surface 51 a. The angle at which both sides of the contact surface 41 a intersect each other is greater than or equal to the intersecting angle of the braking surface 51 a. A ring-shape housing groove 41 b to which the first spring member 53 is to be mounted is formed at the center of the contact surface 41 a. The housing groove 41b is formed so as to oppose a first groove 54a of the grease-filled groove 54.

A turn preventing portion 41 c formed in the direction of rotation with a predetermined length is formed recessed radially outwards on an inner peripheral surface of the brake shoe 41. The three locking protrusions 34f (Figures 6 and 7) formed on the bracket main body 34 of the fixing bracket 30f fit into the turn preventing portion 41c to prevent the divided brake shoe 41 from rotating. However, the brake shoe 41 rotates minutely in correspondence with the play between the locking protrusion 34f and the turn preventing portion 41 c.

As shown in Figure 8, the second cam portion 41 d that engages the roller 62 is formed on inner peripheral surfaces of both sides of the turn preventing portion 41 c of the divided brake shoe 41. The second cam portion 41d is formed so that the inner diameter thereof gradually changes at a portion in contact with the roller 62. The second cam portion 41 d includes: a brake releasing cam 41e at which the roller 62 is disposed during brake release; and braking cams 41 f and 49g disposed on both sides of the brake releasing cam 41 e.

The brake releasing cam 41e is an arc-like portion centered around a center of rotational movement C1 an whose inner diameter from the center of rotational movement C1 is the largest. On the brake releasing cam 41 e, a notch 41 h is formed between the brake releasing cam 41e and the braking cam 41f. The notch 41 h is made up of an arc connecting the brake releasing cam 41e and the braking cam 41f. A radial length of the notch 41h expressible as a difference between two lines L1 and L2 connecting the center of rotational movement C1 of the front hub 6a and the starting point and ending point of the notch 41 h falls within a range from 0.3 mm to 0.7 mm.

The braking cam 41f is used for, for example, the front wheel braking device 13f, and the braking cam 41 g is used for the rear wheel braking device 13r. During braking, the operating arm portion 60 of the braking device 13f pivots counter-clockwise as seen in Figure 2 while the operating arm portion 60 of the braking device 13r pivots clockwise as seen in Figure 2. Therefore, the directions of rotational movement of the cam members 61 for the front wheel and the rear wheel are opposite to each other. As a result, the direction of revolution of the roller 62 also becomes opposite. The roller 62 revolves counter-clockwise towards the side of the braking cam 41f in the case of the front wheel while the roller 62 revolves clockwise in the case of the rear wheel.

The braking cam 41f includes an inclined cam surface formed such that a distance from the center of rotational movement C1 to a first position D1 on the side of the brake releasing cam 41e is longer than a distance from the center of rotational movement C1 to a second position D2 separated from the first position D1. Specifically, the braking cam 41f includes an inclined cam surface in which the length of a straight line L3 extending from the center of rotational movement C1 at the second position D2 is shorter than the length of a straight line L2 at the first position D1 and, at the same time, the distance from the center of rotational movement C1 becomes gradually shorter from the first position D1 towards the second position D2. In the present embodiment, the inclined cam surface is generally made up of arc-like curves. The center C2 of an arc of the inclined cam surface is at a position that is closer to the brake releasing cam 41e than the center of rotational movement C1 and, at the same time, displaced towards the side of the braking cam 41f on the opposite side of a straight line L4 connecting the center portion of the brake releasing cam 41 e and the center of rotational movement C1. Moreover, the center C2 of the inclined cam surface is not limited to the aforementioned position. In addition, the inclined cam surface may be formed with a plurality of continuous straight line or curves instead of arcs.

The braking cam 41 g is formed such that the inner diameter thereof gradually decreases at the same rate as the braking cam 41f, with the brake releasing cam 41e disposed therebetween. Therefore, the braking cam 41f and the braking cam 41 g are disposed line-symmetrically with respect to the straight line L4. Consequently, approximately the same braking characteristics can be obtained even when, for example, the braking cam 41 f is used for the front wheel braking device 13f and the braking cam 41 g is used for the rear wheel braking device 13r.

Note that, in Figure 9, the distances of the center of rotational movement C1 and the center C2 in the radial direction are not accurately depicted.

The first spring member 53 is a ring-like spring member formed by bending an elastic wire rod into a circular shape. The first spring member 53 biases the trisected brake shoe 41 towards a position separated from the brake drum 40 or, in other words, radially inwards. A protruding portion 53a bent radially outwards and protruding is formed at one end of the first spring member 53. The protruding portion 53a is formed such that the protrusion thereof from an inner peripheral portion is within a range of 1.4 mm to 2.0 mm. A tip of the protruding portion 53a is positioned inside the first groove 54a of the grease-filled groove 54 upon braking at which the brake shoe 41 comes into contact with the brake drum 40, and is positioned radially inwards from the first groove 54a during brake release at which the brake shoe 41 separates from the brake drum 40. Accordingly, during braking, the protruding portion 53a is capable of scooping out grease filling the first groove 54a towards the braking surface 51a.

### <Operations of braking system>

In a state where the braking cables 14f and 14r have been set, since the inner cables 16f and 16r are under tension, a play is adjusted using the outer locking portion 22 mounted on the braking levers 12f and 12r or the outer mounting portions 31f and 31r mounted on front and rear braking devices 13f and 13r. Consequently, unless the braking levers 12f and 12r are operated, a gap (play) is formed between the brake shoe 41 and the brake drum 40 as shown in Figure 10.

When the front braking lever 12f is squeezed and operated in this state, the inner cable 16f is pulled against the biasing force of the second spring member 70, and the operating arm portion 60 pivots counter-clockwise from a brake releasing position shown in Figure 10 to a braking position shown in Figure 11. When the operating arm portion 60 rotationally moves counter-clockwise, the cam member 61 also rotationally moves. When the cam member 61 rotationally moves, the roller 62 is obducted onto the inclined cam surface 61a of the first cam portion 61 c. As a result, the roller 62 is pressed against the inclined cam surface 61 a and moves radially outward against the biasing force of the first spring member 53. In the middle of this movement, when the brake shoe 41 comes into contact with the brake drum 40, the roller 62 presses the brake shoe 41 towards the brake drum 40. In addition, due to friction between the cam member 61 or the like, the roller 62 rolls clockwise as indicated by the arrow R in Figure 9 and the roller case 63 rotationally moves counter-clockwise.

When the roller 62 rolls clockwise, the roller 62 moves from the brake releasing cam 41e of the second cam portion 41d to the braking cam 41f shown on the left side of Figure 9. As a result, the decreased amount in the radial direction of the second cam portion 41 d is applied in addition to the increased amount in the radial direction of the first cam portion 61c, and a braking force is obtained which increases linearly with respect to a lever stroke.

This state is illustrated as graphs in Figures 12 and 13. Figure 12 is a graph whose abscissa represents the operating force of the braking lever 12f and ordinate represents braking force. In addition, Figure 13 is a graph whose abscissa represents the lever stroke of the braking lever 12f and ordinate represents braking force. Here, the solid lines represent the braking device 13f according to an embodiment of the present invention which includes the second cam portion 41d on an inner peripheral surface of the brake shoe 41. The dashed lines represent a conventional braking device for comparison and contrast in which a second cam portion is not included and a cam angle of a first cam portion of a cam member is constant.

As is apparent from Figures 12 and 13, when comparing the braking device 13f according to the present embodiment and the conventional braking device which are identical with the exception of the presence/absence of the second cam portion 41 d, the braking forces when the lever operating power or the lever stroke is small are approximately the same. The braking force during a large lever operating force or lever stroke is smaller with the braking device 13f according to the present embodiment which includes the second cam portion 41 d.

With the conventional braking device that does not include the second cam portion, the braking force suddenly and curvedly increases as the lever operating force or the lever stroke is gradually increased. In contrast, with the braking device 13f including the second cam portion 41 d, the braking force does not suddenly increase even when the lever operating force or the lever stroke is large, and a linear braking force is obtained.

In addition, since the cam member 61 has a constant cam angle, the braking characteristic from the time where the brake shoe 41 comes into contact with the brake drum 40 and braking commences is less likely to vary regardless of the phase of rotational movement. Therefore, the braking characteristic after the start of braking can be maintained regardless of the position of rotational movement of the cam member upon the start of braking.

When releasing the front braking lever 12f, the operating arm portion 60 is returned to the side of the brake releasing position by the second spring member 70, and the brake shoe 41 is moved peripherally inward by the first spring member 53 in accompaniment to the rotational movement of the cam member 61 that interlocks with the operating arm portion 60. At this point, the roller case 63 is also biased clockwise as seen in Figure 11 by the third spring member 72 and moves rotationally. Consequently, the roller 62 is disposed at the brake releasing cam 41e.

### <Other Embodiments>

While a description has been given on an embodiment of the present invention, the present invention is not limited to the embodiment described above and various modifications may be made without departing from the scope of the present invention.
(a) While the braking surface 51 a and the contact surface 41 a have been formed into trapezoidal shapes in the embodiment described above, flat circular surfaces may be adopted instead.
(b) While the second cam portion 41d is integrally formed on an inner peripheral surface of the brake shoe 41 in the embodiment described above, the second cam portion 41 d may instead be formed as a separate body.
(c) In the embodiment described above, braking cams 41f and 41g having the same cam shape are disposed on either sides of the brake releasing cam 41 e. In this manner, by arranging two braking cams so as to share the same cam shape, brake shoes for the front and rear wheels can be standardized. In addition, since the brake shoes can even be used when the sides are reversed, assembly errors can be reduced. However, the present embodiment is not limited to such arrangements. For example, two braking cams with different cam shapes may be disposed on either side of the brake releasing cam. In this case, by reverse mounting the sides of a brake shoe, different braking characteristics can be obtained with one brake shoe. In addition, a braking cam may be disposed on only one side of the brake releasing cam.

### [Description of Symbols]

- 1: Frame
- 6, 7: Front and rear wheels
- 6a: Front hub
- 13f, 13r: Front and rear braking devices
- 30f, 30r: Front and rear fixing brackets
- 33f, 33r: Front and rear brake operating portions
- 40: Brake drum
- 41: Brake shoe
- 41 a: Contact surface
- 41 d: Second cam portion
- 41 e: Brake releasing cam
- 41 f, 41 g: Braking cam
- 41h: Notch
- 51 a: Braking surface
- 60: Operating arm portion
- 61: Cam member
- 61c: First cam portion
- 62: Roller
- C 1: Center of rotational movement

## Claims

1. A bicycle hub braking device capable of applying braking to a wheel hub mounted on a bicycle frame, comprising:
a fixing bracket (30f) non-rotatably mountable to the frame;
a cylindrical brake drum (40) having a braking surface formed on an inner peripheral surface thereof and which is disposed so as to oppose the fixing bracket and is integrally rotatable with the hub;
a brake operating portion (33f) including
an operating arm portion (60) mounted to the fixing bracket so as to be pivotable around a hub axle and is coupleable to a braking lever mounted to the bicycle,
a cam member (61) that integrally rotationally moves with the operating arm portion (60) and which has a plurality of first cam portions whose outer diameter gradually increases in a circumferential direction on an outer peripheral surface thereof, each of the plurality of first cam portions (61c) is in contact with a single roller of a plurality of rollers (62) and
a plurality of rollers (62) disposed at intervals in the direction of rotation and which move in a radial direction while rolling in response to the rotational movement of the cam member; and
a plurality of arc-shaped brake shoes (41) disposed so as to pinch the rollers (62) between themselves and the cam member (61) and which include a contact surface (41a) capable of coming into contact with the braking surface (51a) of the brake drum (40) and which include a second cam portion (41d), the plurality of brake shoes (41) being substantially non-rotatable with respect to the fixing bracket (30f) and applying braking to the brake drum (40),
**characterized in that** the second cam portion (41 d) is located on an inner peripheral surface of the respective arc shaped brake shoe (41) and formed such at a distance from the center of rotational movement (C1) of the hub to a first position (D1) on the second cam portion (41d) that is a portion of the second cam portion (41d) in contact with the respective roller differs from a distance from the center of rotational mouvement (C1) to a second position (D2) of the second cam portion (41d) that is separated from the first position (D1).

2. A bicycle hub braking device according to claim 1, wherein the second cam portion (41d) is formed such that its distance from the center of rotational movement of the hub gradually varies.

3. The bicycle hub braking device according to claim 1 or 2, wherein the brake operating portion (33f) further includes:
a roller case (63) provided on the fixing bracket so as to be rotationally movable over a predetermined distance from a brake starting position and which disposes the rollers (62) at intervals in the circumferential direction; and
a biasing member (72) that biases the roller case to the side of the brake starting position.

4. The bicycle hub braking device according to claim 2, wherein the second cam portion (41 d) includes: a brake releasing cam (41 e) at which the rollers are disposed in a brake released state and whose inner diameter is the largest; and a braking cam (41f) formed on at least one side of the brake releasing cam.

5. The bicycle hub braking device according to claim 4, wherein the braking cam (41f) is formed such that the distance from the center of rotational movement gradually de creases as the braking cam (41 f) separates from the brake releasing cam (41 e).

6. The bicycle hub braking device according to claim 3, wherein the second cam portion (41d) includes a brake releasing cam (41e) with which the rollers come into contact in a brake released state and whose inner diameter is the largest; and a braking cam formed on at least one side of the brake releasing cam.

7. The bicycle hub braking device according to claim 6, wherein the braking cam is formed such that the distance between the first position on a boundary with the brake releasing cam and the center of rotational movement is longer than the distance be tween the second position and the center of rotational movement.

8. The bicycle hub braking device according to any one of the claims 4 to 7, wherein the braking cams are formed on both sides of the brake releasing cam.

9. The bicycle hub braking device according to claim 8, wherein the braking cams (41 f, 41 g) on both sides of the brake releasing cam (41 e) have inner diameters that gradually decrease at the same rate.

10. The bicycle hub braking device according to any one of claims 4 to 9, wherein a notch (41 h) is formed between the brake releasing cam (41 e) and the braking cam (41 f).

11. The bicycle hub braking device according to claim 10, wherein the difference in radial lengths of the notch represented as the difference between line segments connecting the center of rotational movement of the hub and the origin and terminal of the notch is within a range of 0.3 mm to 0.7 mm.

## Patentansprüche

1. Fahrradnabenbremsvorrichtung, fähig zum Bewirken einer Verzögerung bezüglich einer Radnabe, die an einem Fahrradrahmen montiert ist, umfassend:
eine Befestigungsklammer (30f), nicht drehbar montierbar bezüglich dem Rahmen;
eine zylindrische Bremstrommel (40) mit einer an einer inneren peripheren Fläche davon gebildeten Bremsfläche und welche so angeordnet ist, dass sie der Befestigungsklammer gegenübersteht und integral drehbar ist mit der Nabe;
einen Bremsbetätigungsabschnitt (33f), enthaltend
einen Betätigungsarmabschnitt (60), montiert an der Befestigungsklammer, um somit schwenkbar zu sein bezüglich einer Nabenachse und koppelbar bezüglich eines an dem Fahrrad montierten Bremshebels,
ein Nockenelement (61), welches sich integral rotatorisch mit dem Betätigungsarmabschnitt (60) bewegt, und welches über eine Vielzahl von ersten Nockenabschnitten verfügt, deren äußerer Durchmesser graduell ansteigt in einer umfänglichen Richtung an einer äußeren peripheren Fläche davon, wobei jeder der Vielzahl an ersten Nockenabschnitten (61c) in Berührung mit einer einzelnen Rolle oder Walze von einer Vielzahl von Rollen oder Walzen (62) in Berührung steht, und
eine Vielzahl an Rollen oder Walzen (62), angeordnet bei Intervallen in der Rotationsrichtung und sich bewegend in einer radialen Richtung während Rollen ansprechend auf die Rotationsbewegung des Nockenelementes; und
eine Vielzahl von bogenförmigen Bremsschuhen (41), derart angeordnet, dass die Rollen oder Walzen (62) zwischen sich und dem Nockenelement (61) eingeklemmt werden, und enthaltend eine Kontakt- oder Berührungsfläche (41 a), fähig um in Kontakt oder Berührung zu treten mit der Bremsfläche (61 a) der Bremstrommel (40) und aufweisend einen zweiten Nockenabschnitt (41d), wobei die Vielzahl an Bremsschuhen (41) im Wesentlichen drehfest oder nicht drehbar mit Bezug auf die Befestigungsklammer (30f) ist und Bremsen oder eine Verzögerung bewirkt bezüglich der Bremstrommel (40), **dadurch gekennzeichnet, dass** der zweite Nockenabschnitt (41 d) befindlich ist an einer inneren peripheren Fläche des jeweiligen bogenförmigen Bremsschuhes (41) und derart ausgebildet ist, dass ein Abstand oder eine Entfernung von der Mitte der Rotationsbewegung (C1) der Nabe zu einem ersten Abschnitt (D1) an dem zweiten Nockenabschnitt (41 d), welches ein Abschnitt des zweiten Nockenabschnittes (41d) in Berührung mit der jeweiligen Walze ist unterschiedlich ist von einem Abstand oder einer Entfernung von der Mitte der Rotationsbewegung (C1) zu einem zweiten Abschnitt (D2) an dem zweiten Nockenabschnitt (41 d), separat von der ersten Position (D1).

2. Fahrradnabenbremsvorrichtung gemäß Anspruch 1, bei welcher der zweite Nockenabschnitt (41d) derart gebildet ist, dass dessen Entfernung oder Abstand von der Mitte der Rotationsbewegung der Nabe graduell variiert.

3. Fahrradnabenbremsvorrichtung gemäß Anspruch 1 oder 2, bei welcher der Bremsbetätigungsabschnitt (33f) ferner enthält:
einen Walzenkäfig (63), bereitgestellt an der Befestigungsklammer, um rotatorisch beweglich zu sein über einen vorbestimmten Weg beziehungsweise über eine vorbestimmte Entfernung von einer Bremsstartposition, und welcher die Rollen oder Walzen (62) bei Intervallen in der umfänglichen Richtung anordnet; und
ein Vorspannelement (72) welches den Walzen oder Rollenkäfig zu der Seite der Bremsstartposition vorspannt.

4. Fahrradnabenbremsvorrichtung gemäß Anspruch 2, bei welcher der zweite Nockenabschnitt (41d) enthält:
eine Bremslösenocke (41e), bei welcher die Walzen oder Rollen angeordnet sind in einem Bremslöse- oder Freigabezustand und deren Innendurchmesser am größten ist;
sowie eine Bremsnocke (41f) gebildet an zumindest einer Seite der Bremslöse- oder Freigabenocke.

5. Fahrradnabenbremsvorrichtung gemäß Anspruch 4, bei welcher die Bremsnocke (41 f) derart gebildet ist, dass die Entfernung oder der Abstand von der Mitte der Rotationsbewegung graduell abnimmt, wenn die Bremsnocke (41 f) sich von der Bremslöseo-der Freigabenocke (41 e) trennt oder separiert.

6. Fahrradnabenbremsvorrichtung gemäß Anspruch 3, bei welcher der zweite Nockenabschnitt (41d) eine Bremslöse- oder Freigabenocke (41e) enthält, mit welcher die Rollen oder Walzen in Kontakt oder in Berührung treten in einem Bremslöse- oder Freigabezustand, und deren Innendurchmesser am größten ist; sowie eine Bremsnocke, gebildet an zumindest einer Seite der Bremslöse- oder Freigabenocke.

7. Fahrradnabenbremsvorrichtung gemäß Anspruch 6, bei welcher die Bremsnocke derart gebildet ist, dass der Abstand oder die Entfernung zwischen dem ersten Abschnitt an einer Grenze mit der Bremslöse- oder Freigabenocke und der Mitte der Rotationsbewegung länger ist als der Abstand oder die Entfernung zwischen der zweiten Position und der Mitte der Rotationsbewegung.

8. Fahrradnabenbremsvorrichtung gemäß einem der Ansprüche 4 bis 7, bei welcher die Bremsnocken an beiden Seiten der Bremslöse- oder Freigabenocke gebildet sind.

9. Fahrradnabenbremsvorrichtung gemäß Anspruch 8, bei welcher die Bremsnocken (41 f, 41 g) an beiden Seiten der Bremslöse- oder Freigabenocke (41 e) Innendurchmesser aufweisen, die graduell bei derselben Rate abnehmen.

10. Fahrradnabenbremsvorrichtung gemäß einem der Ansprüche 4 bis 9, bei welcher eine Kerbe (41h) zwischen der Bremslöse- oder Freigabenocke (41e) und der Bremsnocke (41 f) gebildet ist.

11. Fahrradnabenbremsvorrichtung gemäß Anspruch 10, bei welcher der Unterschied in radialen Längen der Kerbe oder des Spaltes, ausgedrückt als Unterschied zwischen Liniensegmenten, die die Mitte der Rotationsbewegung der Nabe und den Ursprung sowie das Ende der Kerbe oder Nut in einem Bereich liegt von 0,3 mm bis 0,7 mm.

## Revendications

1. Dispositif de freinage de moyeu de bicyclette capable d'appliquer un freinage à un moyeu de roue monté sur un cadre de bicyclette, comprenant :
un élément de support de fixation (30f), qui peut être monté non rotatif au cadre ;
un tambour de frein cylindrique (40), ayant une surface de freinage formée sur une surface périphérique interne du tambour, et qui est disposé de sorte d'être opposé à l'élément de support de fixation, et qui peut tourner intégralement avec le moyeu ;
une partie d'actionnement de frein (33f), comprenant
une partie de bras opérationnelle (60), montée à l'élément de support de fixation, de sorte de pouvoir pivoter autour d'un axe de moyeu, et qui peut être couplée à un levier de frein monté sur la bicyclette,
un élément de came (61), qui bouge en rotation intégralement avec la partie de bras opérationnelle (60), et qui a une pluralité de premières parties de came dont le diamètre externe augmente de manière graduée dans une direction circonférentielle sur une surface périphérique externe de celle-ci, chacune de la pluralité de premières parties de came (61c) étant en contact avec un rouleau unique d'une pluralité de rouleaux (62), et
une pluralité de rouleaux (62), disposés à des intervalles dans la direction de rotation, et qui se déplacent dans une direction radiale tout en roulant ou tournant, en réponse au mouvement de rotation de l'élément de came ; et
une pluralité de sabots de frein en forme d'arc (41), disposés de sorte à pincer les rouleaux (62) entre eux-mêmes et l'élément de came (61), et qui comprend une surface de contact (41a) capable de venir en contact avec la surface de freinage (61a) du tambour de frein (40), et qui comprend une deuxième partie de came (41 d), la pluralité de sabots de frein (41) étant sensiblement non rotative par rapport à l'élément de support de fixation (30f), et appliquant un freinage au tambour de frein (40) ;
**caractérisé en ce que** la deuxième partie de came (41d) est située sur une surface périphérique interne d'un sabot de frein en forme d'arc respectif (41), et est formée de sorte qu'une distance depuis le centre d'un mouvement rotationnel (C1) du moyeu vers une première position (D1) sur la deuxième partie de came (41) qui est une partie de la deuxième partie de came (41d) en contact avec le rouleau respectif diffère d'une distance depuis le centre d'un mouvement rotationnel (C1) vers une deuxième position (D2) sur la deuxième partie de came (41d) qui est espacée de la première position (D1).

2. Dispositif de freinage de moyeu de bicyclette selon la revendication 1, dans lequel la deuxième partie de came (41 d) est formée de sorte que sa distance depuis le centre de mouvement de rotation du moyeu varie graduellement.

3. Dispositif de freinage de moyeu de bicyclette selon la revendication 1 ou 2, dans lequel la partie opérationnelle de frein (33f) comprend en outre :
un boitier de rouleaux (63), fourni sur l'élément de support de fixation de sorte d'être mobile en rotation sur une distance prédéterminée depuis une position de départ de frein, et qui dispose les rouleaux (62) à des intervalles dans la direction circonférentielle ;
et un élément de sollicitation (72) qui sollicite le boitier de rouleaux vers le côté de la position de départ de frein.

4. Dispositif de freinage de moyeu de bicyclette selon la revendication 2, dans lequel la deuxième partie de came (41d) inclut : une came de libération de frein (41 e), au niveau de laquelle les rouleaux sont disposés dans un état libéré de frein et dont le diamètre interne est le plus grand ; et une came de freinage (41 f) formée sur au moins un côté de la came de libération de frein.

5. Dispositif de freinage de moyeu de bicyclette selon la revendication 4, dans lequel la came de freinage (41f) est formée de sorte que la distance depuis le centre de mouvement de rotation diminue de manière graduée lorsque la came de freinage (41f) se sépare de la came de libération de frein (41e).

6. Dispositif de freinage de moyeu de bicyclette selon la revendication 3, dans lequel la deuxième partie de came (41d) comprend une came de libération de frein (41e) avec laquelle les rouleaux viennent en contact dans un état libéré de frein et dont le diamètre interne est le plus grand ; et une came de freinage formée sur au moins un côté de la came de libération de frein.

7. Dispositif de freinage de moyeu de bicyclette selon la revendication 6, dans lequel la came de freinage est formée de sorte que la distance entre la première position sur une frontière avec la came de libération de frein, et le centre du mouvement de rotation est supérieure à la distance entre la deuxième position et le centre de mouvement de rotation.

8. Dispositif de freinage de moyeu de bicyclette selon l'une quelconque des revendications 4 à 7, dans lequel les cames de freinage sont formées sur les deux côtés de la came de libération de frein.

9. Dispositif de freinage de moyeu de bicyclette selon la revendication 8, dans lequel les cames de freinage (41f, 41g) sur les deux côtés de la came de libération de frein (41) ont des diamètres internes qui diminuent de façon graduée, de la même manière.

10. Dispositif de freinage de moyeu de bicyclette selon l'une quelconque des revendications 4 à 9, dans lequel une encoche (41h) est formée entre la came de libération de frein (41e) et la came de freinage (41f).

11. Dispositif de freinage de moyeu de bicyclette selon la revendication 10, dans lequel la différence de longueurs radiales de l'encoche représentée comme la différence entre des segments linéaires reliant le centre de mouvement de rotation du moyeu et l'origine et la fin de l'encoche se trouve dans une gamme comprise entre 0.3 mm et 0.7 mm.
